# EUROPEAN PATENT SPECIFICATION

(11) **EP 1 366 728 B1**
(45) Date of publication and mention of the grant of the patent: **28.06.2006**
(21) Application number: 03010773.4
(22) Date of filing: 14.05.2003
(51) Int. Cl.: A61C 17/06, A61C 17/14

(54) **Surgical draining apparatus, in particular for a dental surgery**
Chirurgische Entleerungsvorrichtung, insbesondere für eine Zahnartzpraxis
Dispositif de vidage chirurgical, en particulier pour un cabinet dentaire

(30) Priority: 27.05.2002 IT PC20020016
(43) Date of publication of application: 03.12.2003
(73) Proprietor: Bartocci, Ezio, 29100 Piacenza PC (IT)
(72) Inventor: Bartocci, Ezio, 29100 Piacenza PC (IT)
(74) Representative: La Ciura, Salvatore

(56) References cited:
- EP-A- 0 355 467
- WO-A-01/72395
- AT-B- 401 228
- DE-A- 3 101 954
- DE-A- 4 328 990
- US-A- 3 964 112
- US-A- 5 577 910

## Description

This invention relates to a surgical suction unit designed in particular, but not solely, for use in dental surgeries, which said unit comprises a liquid-ring suction pump associated with a liquid recirculation unit, the latter unit being fitted with a heat exchanger designed to cool the liquid returned into circulation, systems for collection of heavy metal amalgam particles, and a tank designed to collect liquids for recirculation in the pump.

The unit according to the invention combines the advantages of known liquid-ring systems (high negative pressure values achievable, ability to discharge aspirated fluids continuously), but is not subject to their limitations, especially high water consumption.

Units designed to aspirate and remove "surgical" fluids and liquids are used in numerous medical applications, and in particular in dental surgeries.

Units in which a suction pump is connected via pipes to cannulae or other suction devices used at the point of operation are known for this purpose.

The known systems are substantially divided into three main categories: liquid-ring units, air-ring units and wet-ring units.

"Liquid-ring" systems involve the use of a centrifugal pump with an impeller immersed in a ring of liquid. An air/liquid separator is located at the pump outlet.

A unit of this kind is described, for example, in German patent DE 3101954.

Liquid-ring units offer the advantage that a high negative pressure value can be achieved by the pump which, by creating a high suction speed in the suction cannulae, keeps the operating area and all conveyor pipes clean, even in the presence of large spillages.

Another advantage is their ability to discharge the aspirated fluids continuously, said fluids being discharged non-stop at positive pressure into the air/liquid separator.

However, liquid-ring units present the drawback of requiring very high water consumption to maintain the liquid ring around the impeller, and this problem is liable to become increasingly serious in future.

"Air-ring" systems, which have represented the alternative to the liquid-ring system for decades, comprise a centrifugal air-ring pump to generate the vacuum, and an air/liquid separator installed between the suction points in the operating area and the pump.

The separator, which operates in the part of the circuit in negative pressure, accumulates the aspirated fluids up to a maximum capacity level, after which it must be discharged, and the pump has to be shut down.

The system consequently presents the considerable drawback of noncontinuous operation, as well as slow air suction, which constitutes an intrinsic limitation of air-ring pumps.

A further limitation is the need for regular maintenance of the separator vessel, which requires frequent manual cleaning, with the risk of microbiological contamination of the operators.

The "wet-ring" system, which constitutes a development on air-ring devices, involves the use of a centrifugal air-ring pump combined with a motor-driven centrifugal separator of the liquids conveyed by the current.

The "wet-ring" system involves the use of a centrifugal air-ring pump combined with a motor-driven centrifugal separator which separates the liquids conveyed by the vacuum current and the solid particles of amalgam, consisting of heavy metals such as mercury, tin, silver, copper, zinc, palladium, indium, etc..

Some of these units include separate motors for the pump and the liquid and amalgam separator, involving increased costs, energy consumption, size and noise levels.

In other cases, a single motor is installed.

However, the problem of low head of air-ring pumps still remains in this version; this means a low transport speed of the fluids in the pipes, stagnation and undrained deposits in the ducts, which requires the suction unit to be over-dimensioned and makes it more complicated to manufacture the vacuum pipes. Moreover, considerable infiltrations of moisture take place, especially in the parts constituting the air-ring pump, leading to problems of condensation, microbiological pollution and chemical aggression in a part of the unit which cannot be washed or sanitised unless it is dismantled.

A liquid-ring system has also been proposed wherein the pump is connected to a tank which separates the air from the circulating fluids by means of a pipe that recirculates the accumulated liquid.

However, this system presents the drawback of overheating the liquid, which is continually recirculated by the pump until it reaches such a temperature as to considerably reduce the performance of the pump and the entire system, thus forcing the designer to over-dimension all the components of the installation.

A further limitation of this system is that the amalgams are separated in decantation vessels located in the suction section upstream of the pump, and this system is unable to retain the smaller particles that travel at high speed, which are deposited in the liquid collection tank and conveyed from there to the outlet filter, which is thus often clogged, so that periodic maintenance of the system is required.

These drawbacks and limitations are overcome by a surgical suction unit according to the characterising part of the annexed claims.

The invention will now be described in detail, by way of example but not of limitation, by reference to the annexed figures, wherein:
- figure 1 is a simplified diagram of the suction unit according to the invention;
- figure 2 shows separation devices located at the pump outlet, in cross-section;
- figure 2a shows a variation on the devices illustrated in figure 2;
- figures 3a to 3d schematically illustrate different embodiments of the devices which input the fluids into the pump;
- figure 4 is a view of a unit according to the invention.

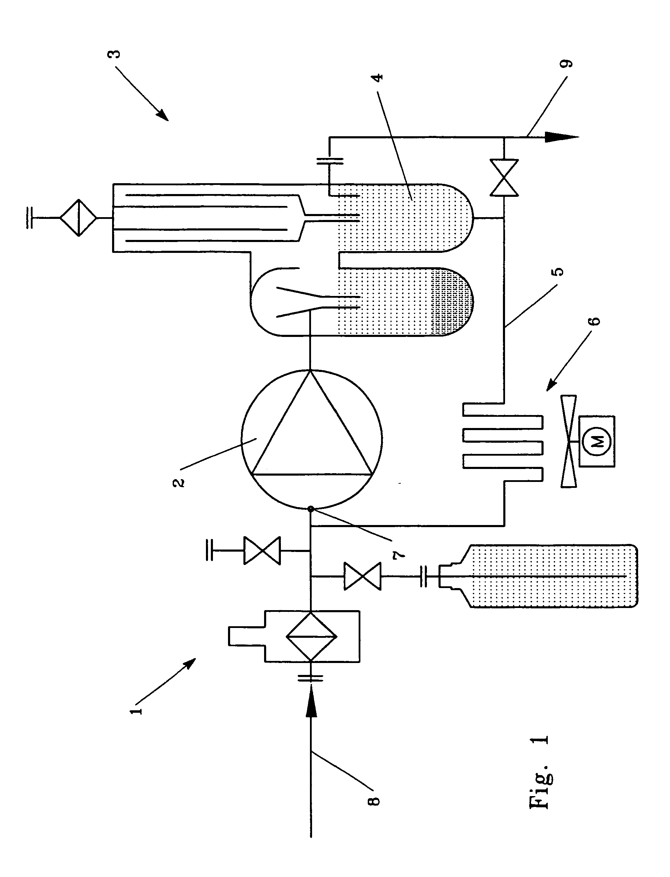

The apparatus according to the invention (see figure 1) substantially consists of three units: an input unit shown as 1, a liquid-ring pump 2 which circulates the fluids, and a unit indicated as 3, which separates the amalgams and liquids from the air.

The separation unit also comprises a liquid collection tank 4, connected to pump inlet 7 via a pipe 5, to which a heat exchanger 6 is fitted.

The surgical fluids, air and liquids from the various uses are conveyed from there, through pipes 8, to input unit 1, then to pump 2, and from there to separation unit 3.

The liquids are then recirculated after suitable cooling, and the surplus is discharged through outlet pipe 9.

Input unit 1 and separator unit 3 will now be described in more detail.

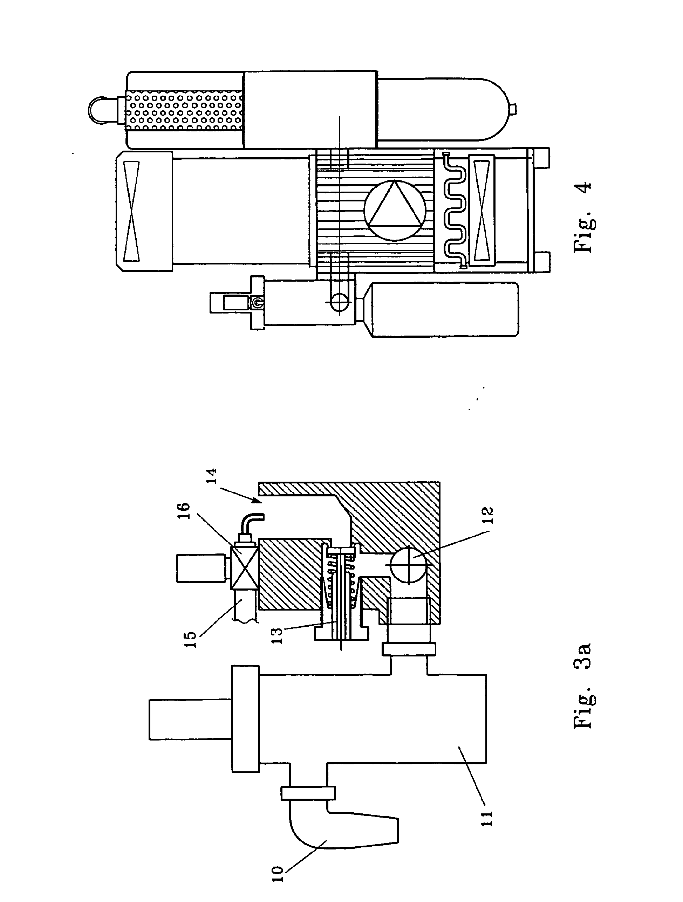

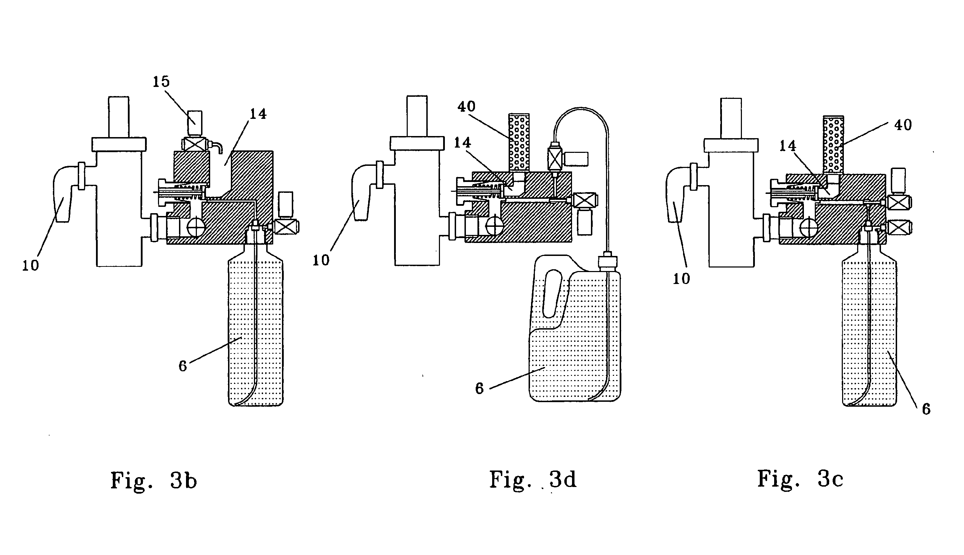

Input unit 1 (see figure 3a) comprises a connector 10 connected to pipes which lead to the various points of use, a filter 11 designed to separate the coarser solid parts, and a pipe 12 downstream of the filter, which leads to pump inlet 7.

Pipe 12 is connected to a well 14 for input of environmental air. Well 14 also leads to a pipe 15 connected to the water network, to which a solenoid valve 16 or the like is fitted, allowing a certain quantity of top-up water to be introduced into the well when necessary if the unit is emptied for maintenance purposes. This solution creates a physical separation between the water network and the device, in order to eliminate all risk of bacterial contamination of the water network.

A valve of known type 13 is fitted to the connector that leads from well 14 to pump inlet pipe 12, enabling the vacuum in suction pipes 10 leading to the point of use to be regulated.

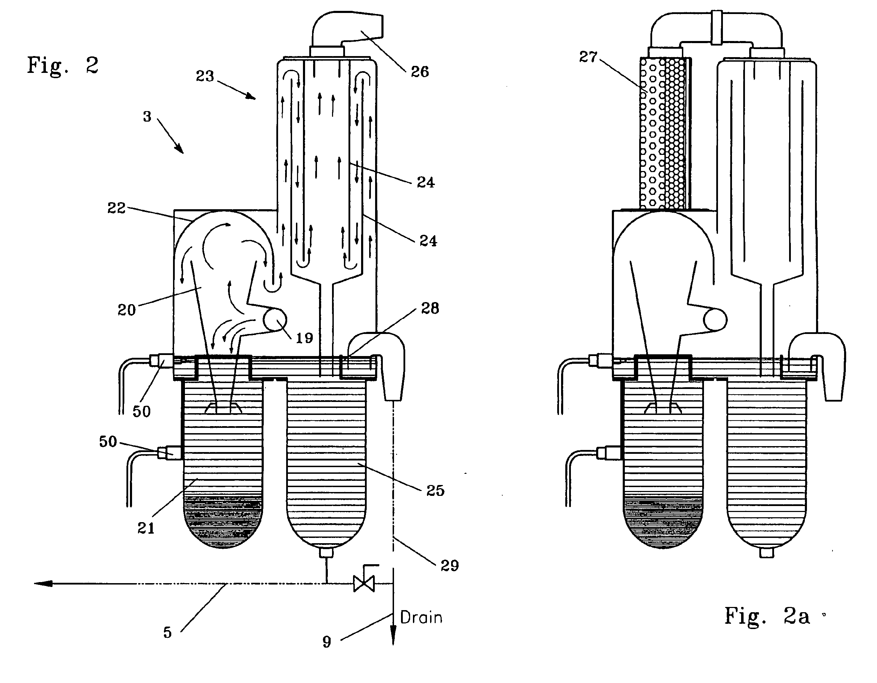

Separator unit 3, illustrated in detail in figure 2, is installed downstream of the pump.

Number 19 indicates the pipe leading from the outlet of pump 2, from which water mixed with air and the particles aspirated at the various points of use arrives.

Pipe 19 leads to a separator device 20 consisting, for example, of a cyclone or other similar device of known type in which the heavier parts, especially amalgams, are separated after a reduction in the speed of the fluids conveyed from the pump; said parts then drop downwards and are collected on the bottom of a removable tank 21, located below cyclone 20. When tank 21 is full, the accumulated liquids spill over the overfall that separates it from the next tank 25 and flow into that tank, while the heavier parts are deposited on the bottom of tank 21. The air and the lighter parts exit from the upper part of the cyclone, guided by a shaped partition or wall 22, and are conveyed to a second separator shown as 23. This separator is constituted by a set of concentric tubular elements 24 that force the air to perform a series of sudden reversals of the direction of motion, as shown by the arrows in figure 2. These sudden reversals of motion aid the separation of the liquids into aerosols, which collect in a second tank 25, also removable, located under separator 23.

The air exits from separator 23 through an outlet pipe 26 leading to the exterior; a bacterial filter 27 can be fitted to said pipe if the air is to be recirculated into the premises.

The filter is shown in figure 2a, which illustrates a separator complex similar to the previous one but fitted with said filter.

Tank 25, in which liquids from which the solid particles have been almost entirely removed collect, is fitted with an overfall 28 from which the liquid in the upper part of the tank is conveyed to an outlet pipe 29. Sensors 50 of known type detect the level of the solid parts in tank 21 and of the liquids in tanks 21 and 25.

Recirculation pipe 5, leading to the pump inlet, is connected to a connection 30 in the bottom of tank 25.

The system operates as follows.

When pump 2 is switched on, a strong negative pressure is created in pipe 12, as a result of which air is aspirated through pipes 10 leading to the points of use, which said air draws surgical liquids and the various solid particles with it.

This mixture of fluids and solids is conveyed to the pump, from which it is conveyed to the set of separation units 3.

By suitably regulating valve 13, suction pipe 12 leading to pump inlet 7 can be placed in communication with well 14 through which environmental air is aspirated, thus allowing the vacuum created by suction in pipes 10 to be regulated as required.

The necessary amount of water can be introduced into the well when the liquids in the unit need to be topped up; said water flows down into the well and is also aspirated by the pump.

The configuration illustrated allows physical separation between the water network and the unit, so as to eliminate all risk of countercurrent bacterial migration and prevent contamination of said network.

Alternatively, as shown in figures 3b, 3c and 3d, a tank of sanitising liquid 6 could be connected to pipe 12 and the pump inlet.

Sanitising liquid tank 6 can be screwed directly to the body of input unit 1 as illustrated in figure 3b, or may be constituted by a separate can which is always connected to the input unit via suitable pipes fitted with valve devices of known type as illustrated in figure 3d; alternatively, it can be conveyed to the point of input of water from the network, as illustrated in figure 3c.

In the last two cases a filter, shown as no. 40, can be fitted to the inlet of environmental air suction well 14.

The fluids and solid particles aspirated by the pump are then expelled under positive pressure and conveyed to separator unit 3, through pipe 19 (fig. 2).

Here, the fluids enter cyclone 20, in which their flow rate suddenly slows; the heavier solid parts, especially amalgams of heavy metals, then spill downwards and collect on the bottom of removable tank 21.

Alternatively, a motor-driven cyclone of known type could be installed instead of cyclone 20; in this case the complex will be configured differently.

The air, with part of the nebulised liquids, is deviated by wall 22, and conveyed to separator device 23. Here, the abrupt reversals of the direction of motion and variations in speed undergone by the fluid current in order to pass into the cavity between the various tubular elements 24 leads to detachment of the residues, which fall to the bottom and collect in collection tank 25.

The air, free of liquids and solid particles, can then be conveyed to the exterior through pipe 26, or returned into the premises after being passed through filter 27.

The liquids arriving from the overfall of tank 21, with the finer solid particles, collect in tank 25, where they are drawn through connector 30 and conveyed along recirculation pipe 5.

Next, the liquids are cooled in heat exchanger 6, sent back to the inlet of the pump 7, and returned into circulation.

Any surplus liquid spills over overfall 28 and can be discharged along pipe 29.

The system described offers numerous advantages compared with the currently known systems.

The use of a liquid-ring pump as vacuum generator allows high vacuum values to be obtained, with a suitable transport speed of the fluids aspirated through the suction pipes leading from the cannulae; it ensures that all the aspirated fluids pass through the pump, with the advantage of safe transport through a single pipe which can be washed and sanitised without being dismantled, while the discharge of liquids under positive pressure downstream of the pump facilitates their separation and discharge. The characteristics of the input unit ensure effective protection of the water network against contamination because either there is no connection between the two circuits, so transmigration of pollutant microbial colonies in countercurrent is impossible, or the sanitising liquid keeps the pressurised running water input connection sterile.

The fact that liquids are recovered and recirculated after separation aids aggregation of the microparticles not removed during earlier stages and the formation of larger, heavier precipitates which escape the Brownian motion of suspensions, and are deposited sooner or later in collection tank 21.

The fact that a heat exchanger cools the liquid returned into circulation maintains constant pump efficiency, and prevents the formation of internal scaling due to precipitation of the salts in the circulating liquids.

Improvements in the most significant aspects of sanitary applications are thus achieved at the same time, namely:
- no water consumption for continuous operation;
- a high level of hygiene without maintenance;
- recovery of heavy metals;
- high performance and constant efficiency in continuous service;
- energy saving;
- low noise levels;
- a highly reliable system which is simple to manufacture.

An expert in the field could devise various modifications and variations, all of which should be deemed to fall within the ambit of this invention.

## Claims

1. Surgical suction unit for dental surgeries, **characterised in that** it includes:
• a liquid-ring suction pump (2);
• an input unit (1), upstream of said pump (2), connectable to the various points of use;
• a separator unit (3), downstream of said pump (2), which said separator unit comprises first means (20) designed to separate the solid and liquid particles from the fluids received from the pump, and second means (23) designed to separate the remaining liquids from the air;
• a first tank (21) designed to collect said solid and liquid parts;
• a second tank (25) designed to collect said liquids; and
• means (5) designed to place said second tank in communication with the pump inlet.

2. Surgical suction unit as claimed in claim 1, **characterised in that** an overfall is created between said first and second tanks (21, 25) which allows the liquid present in said first tank to flow into the adjacent tank.

3. Surgical suction unit as claimed in claim 2, **characterised in that** means (6) are installed along the route (5) that connects said liquid and particle collection tank (25) with the inlet of pump (2) to cool said liquid.

4. Surgical suction unit as claimed in claim 1, **characterised in that** said separation means (3) comprise first devices (20) designed to separate the solids and liquids from the air flow and second devices (23) designed to separate the liquids into aerosols, which said first and second devices are arranged in series.

5. Surgical suction unit as claimed in claim 4, **characterised in that** said separator (23) which separates the liquids in aerosol form from the expelled air comprises a plurality of concentric pipes (24) with different cross-sectional shapes, designed to impose abrupt reversals and variations of motion on the air flow for the purpose of recovering the condensed liquids.

6. Surgical suction unit as claimed in claim 4 or 5, **characterised in that** it includes tanks (21, 25) for collection of the solids and liquids associated with said first and second separation devices (20, 23) respectively, which said tanks are connected by an overfall.

7. Surgical suction unit as claimed in each of the preceding claims, **characterised in that** it includes an inlet unit (1) for the fluids aspirated by the pump, which is fitted with a well (14) communicating with pipe (12) that conveys the aspirated fluids to the pump, means (15, 16) designed to pour water from the water network into said well being fitted.

8. Surgical suction unit as claimed in claim 7, **characterised in that** it includes adjustable valve means (13) designed to place said well (14) in communication with said aspirated fluid supply pipe (12) to regulate the degree of vacuum in the pipes.

9. Surgical suction unit as claimed in each of the preceding claims, **characterised in that** it includes a tank of sanitising liquid (6) connected to the inlet pipe leading to pump (2).

10. Surgical suction unit as claimed in each of the preceding claims, **characterised in that** it includes, at the outlet of said pump (2), means (20) designed to slow the speed of the fluids conveyed by the pump to allow separation of the liquids and heavy parts, and means (23), downstream of the preceding ones, designed to separate the liquids in aerosol form from the airflow, each of which separator means is associated with the corresponding collection tank (21, 25), which said tanks are arranged in series and connected by an overfall, a pipe (5) designed to draw liquid from the bottom of said second tank (25) and convey it to the inlet of pump (2) being fitted.

11. Surgical suction unit as claimed in claim 9, **characterised in that** means (6) designed to cool the liquid conveyed to pump (2) are fitted on said pipe (5).

12. Surgical suction unit as claimed in claim 10, **characterised in that** said tanks (21, 25) are removable.

13. Surgical suction unit as claimed in claim 11, **characterised in that** it includes level gauges (50) for the solid parts in tank (21) and the liquids in tank (25).

## Patentansprüche

1. Chirurgisches Absauggerät für Zahnarztpraxen, **gekennzeichnet durch** die Tatsache, dass Folgendes vorgesehen ist:
• eine Absaugpumpe (2) des Typs eines flüssigen Rings;
• eine Eingangssperre (1) vor besagter Pumpe (2), anschließbar an den verschiedenen Verwendungspunkten;
• eine Trenngruppe (3) nach besagter Pumpe (2), wobei besagte Trenngruppe erste Mittel (20) besitzt, die geeignet sind, die festen und flüssigen Teilchen aus den von der Pumpe kommenden Flüssigkeiten abzuscheiden, und zweite Mittel (23), die geeignet sind, die verbleibende Flüssigkeit aus der Luft auszuscheiden;
• ein erster Auffangbehälter (21) für besagte feste und flüssige Teilchen;
• ein zweiter Auffangbehälter (25) für die besagte Flüssigkeit; und
• Mittel (5), die geeignet sind, den besagten zweiten Behälter mit dem Pumpeneingang in Verbindung zu bringen.

2. Chirurgisches Absauggerät gemäß Anspruch 1, charakterisiert durch die Tatsache, dass ein Überlaufwehr zwischen besagtem ersten und zweiten Behälter (21, 25) vorgesehen ist, das geeignet ist, der im ersten Behälter vorhandenen Flüssigkeit zu erlauben, in den benachbarten Behälter zu gelangen.

3. Chirurgisches Absauggerät gemäß Anspruch 2, charakterisiert durch die Tatsache, dass Mittel (6) vorgesehen sind längs der Strecke (5), die den besagten Auffangbehälter (25) für die Flüssigkeiten und die Teilchen mit dem Eingang der Pumpe (2) verbindet, die geeignet sind, besagte Flüssigkeit abzukühlen.

4. Chirurgisches Absauggerät gemäß Anspruch 1, charakterisiert durch die Tatsache, dass besagte Trennmittel (3) erste Vorrichtungen (20) umfassen, die geeignet sind, die festen und die flüssigen Teilchen vom Luftfluss zu trennen, und ferner zweite Vorrichtungen (23), die geeignet sind, die Flüssigkeiten in Aerosol auszuscheiden, wobei besagte erste und zweite Vorrichtungen sind in Serien ausgelegt sind.

5. Chirurgisches Absauggerät gemäß Anspruch 4, charakterisiert durch die Tatsache, dass besagter Ausscheider (23) der Flüssigkeiten aus der ausgestoßenen Luft in Aerosol eine Mehrzahl von konzentrischen Schläuchen (24) mit verschiedenen Durchmessern umfasst, die geeignet sind, für die Rückgewinnung der kondensierten Flüssigkeiten dem Luftfluss plötzliche Umkehrungen und Variationen aufzuzwingen.

6. Chirurgisches Absauggerät gemäß Anspruch 4 oder 5, charakterisiert durch die Tatsache, dass Auffangbehälter (21, 25) für die festen und die flüssigen Teilchen vorgesehen sind, die jeweils mit besagten ersten und zweiten Trennvorrichtungen (20, 23) in Verbindung stehen, da die Behälter durch ein Überlaufwehr verbunden sind.

7. Chirurgisches Absauggerät gemäß jedem der vorhergehenden Ansprüche, charakterisiert durch die Tatsache, dass eine Eingangssperre
(1) für die von der Pumpe abgesaugten Flüssigkeiten vorgesehen ist, die eine Auffanggrube (14) vorsieht, die mit der Zuführleitung (12) zur Pumpe der angesaugten Flüssigkeiten in Verbindung steht, denn es sind Mittel (15, 16) vorgesehen, die geeignet sind, Wasser aus dem Wassernetz in besagte Auffanggrube einzubringen.

8. Chirurgisches Absauggerät gemäß Anspruch 7, charakterisiert durch die Tatsache, dass regulierbare Ventile (13) vorgesehen sind, die geeignet sind, besagte Auffanggrube (14) mit besagter Zuführleitung (12) der angesaugten Flüssigkeiten in Verbindung zu setzen, um die Vakuummenge in den Leitungen zu regulieren.

9. Chirurgisches Absauggerät gemäß jedem der vorhergehenden Ansprüche, charakterisiert durch die Tatsache, dass ein Behälter mit Desinfektionsflüssigkeit (6) vorgesehen ist, der mit der Eingangsleitung zur Pumpe verbunden ist (2).

10. Chirurgisches Absauggerät gemäß jedem der vorhergehenden Ansprüche, charakterisiert durch die Tatsache, dass am Ausgang besagter Pumpe (2) Mittel (20) vorgesehen sind, die geeignet sind, die Geschwindigkeit der aus der Pumpe kommenden Flüssigkeit zu verlangsamen, um die Trennung der Flüssigkeiten und der schweren Teilchen zu erlauben, und ferner Mittel (23) vor den vorherigen, die geeignet sind, die Flüssigkeiten aus dem Luftfluss in Aerosol abzuscheiden, denn jedes der besagten Mittel ist mit einem entsprechenden Auffangbehälter (21, 25) assoziiert, wobei besagte Behälter in einer Reihe angebracht und an ein Überlaufwehr angeschlossen sind und wobei eine Leitung (5) vorgesehen ist, die geeignet ist, Flüssigkeit vom Boden des besagten zweiten Behälters (25) zu entnehmen und zum Eingang der Pumpe (2) zu leiten.

11. Chirurgisches Absauggerät gemäß Anspruch 9, charakterisiert durch die Tatsache, dass auf besagter Leitung (5) Mittel (6) vorgesehen sind, die geeignet sind, die zur Pumpe (2) geleitete Flüssigkeit abzukühlen.

12. Chirurgisches Absauggerät gemäß Anspruch 10, charakterisiert durch die Tatsache, dass besagte Behälter (21, 25) entfernbar sind.

13. Chirurgisches Absauggerät gemäß Anspruch 11, charakterisiert durch die Tatsache, dass Niveauanzeiger (50) für die festen Teile im Behälter (21) und für die Flüssigkeiten im Behälter (25) vorgesehen sind.

## Revendications

1. Appareil d'aspiration chirurgical pour cabinets dentaires, **caractérisé par le fait qu'**il prévoit :
• une pompe d'aspiration (2) du type à anneau liquide;
• un bloc d'entrée (1), en amont de ladite pompe (2), pouvant être relié à différents points d'utilisation;
• un groupe séparateur (3), en aval de ladite pompe (2), ledit groupe séparateur comprenant des premiers dispositifs (20) en mesure de séparer les particules solides et liquides des fluides provenant de la pompe et des seconds dispositifs (23) en mesure de séparer les liquides résiduels de l'air;
• un premier réservoir (21) contenant lesdites particules solides et liquides;
• un second réservoir (25) contenant lesdits liquides et
• les dispositifs permettant (5) de mettre en communication ledit second réservoir avec l'entrée de la pompe.

2. Appareil d'aspiration chirurgical selon la revendication n° 1, **caractérisé par le fait qu'**il prévoit un déversoir entre lesdits premier et second réservoir (21, 25) en mesure de permettre au liquide présent dans ledit premier réservoir de passer dans le réservoir adjacent.

3. Appareil d'aspiration chirurgical selon la revendication n° 2, **caractérisé par le fait qu'**il prévoit, le long du parcours (5) qui relie ledit réservoir (25) contenant des liquides et des particules avec l'entrée de la pompe (2), des dispositifs (6) en mesure de refroidir ledit liquide.

4. Appareil d'aspiration chirurgical selon la revendication n° 1, **caractérisé par le fait que** lesdits dispositifs de séparation (3) comprennent des premiers dispositifs (20) en mesure de séparer les solides et les liquides du flux d'air et des seconds dispositifs (23) en mesure de séparer les liquides en aérosol, lesdits premiers et seconds dispositifs étant disposés en série.

5. Appareil d'aspiration chirurgical selon la revendication n° 4, **caractérisé par le fait que** ledit séparateur (23) des liquides en aérosol de l'air expulsé comprend plusieurs tuyaux concentriques (24) de différentes sections, en mesure d'imposer de brusques inversions et variations du flux d'air pour la récupération des liquides condensés.

6. Appareil d'aspiration chirurgical selon les revendications n° 4 ou 5, **caractérisé par le fait qu'**il prévoit des réservoirs (21, 25) contenant des solides et des liquides respectivement associés auxdits premiers et seconds dispositifs de séparation (20, 23), lesdits réservoirs étant reliés par un déversoir.

7. Appareil d'aspiration chirurgical selon toutes les revendications précédentes, **caractérisé par le fait qu'**il prévoit un bloc (1) d'entrée des fluides aspirés par la pompe, qui présente un puisard (14) en communication avec le conduit (12) d'adduction à la pompe des fluides aspirés, sachant que sont prévus des dispositifs (15, 16) en mesure de verser de l'eau provenant du réseau d'alimentation dans ledit puisard.

8. Appareil d'aspiration chirurgical selon la revendication n° 7, **caractérisé par le fait qu'**il prévoit des dispositifs valvulaires réglables (13) en mesure de mettre en communication ledit puisard (14) avec ledit conduit (12) d'adduction des fluides aspirés de façon à régler le degré de vide dans les conduits.

9. Appareil d'aspiration chirurgical selon toutes les revendications précédentes, **caractérisé par le fait qu'**il prévoit un réservoir de liquide désinfectant (6) relié au conduit d'entrée de la pompe (2).

10. Appareil d'aspiration chirurgical selon toutes les revendications précédentes, **caractérisé par le fait qu'**il prévoit, à la sortie de ladite pompe (2) des dispositifs (20) en mesure de ralentir la vitesse des fluides en provenance de la pompe de façon à permettre la séparation des liquides et des particules plus lourdes, et des dispositifs (23) en aval des précédents, en mesure de séparer les liquides en aérosol du flux d'air, chacun desdits dispositifs séparateurs étant associé à un réservoir correspondant (21, 25), lesdits réservoirs étant disposés en série et reliés par un déversoir, sachant qu'il est prévu un conduit (5) en mesure de prélever le liquide dans le fond dudit second réservoir (25) et de le diriger vers l'entrée de la pompe (2).

11. Appareil d'aspiration chirurgical selon la revendication n° 9, **caractérisé par le fait qu'**il prévoit, sur ledit conduit (5), des dispositifs (6) en mesure de refroidir le liquide véhiculé vers la pompe (2).

12. Appareil d'aspiration chirurgical selon la revendication n° 10, **caractérisé par le fait que** lesdits réservoirs (21, 25) sont amovibles.

13. Appareil d'aspiration chirurgical selon la revendication n° 11, **caractérisé par le fait qu'**il prévoit des indicateurs de niveau (50) des particules solides présentes dans le réservoir (21) et des liquides présents dans le réservoir (25).
